# EUROPÄISCHE PATENTSCHRIFT

(11) **EP 2 220 829 B1**
(45) Veröffentlichungstag und Bekanntmachung des Hinweises auf die Patenterteilung: **30.08.2017**
(21) Anmeldenummer: 08867489.0
(22) Anmeldetag: 29.11.2008
(51) Int. Cl.: H04L 12/40, H04L 12/413, H04L 29/06, H04L 12/66

(54) **KOMMUNIKATIONSSYSTEM**
COMMUNICATION SYSTEM
SYSTÈME DE COMMUNICATION

(30) Priorität: 21.12.2007 DE 102007062073
(43) Veröffentlichungstag der Anmeldung: 25.08.2010
(73) Patentinhaber: Bayerische Motoren Werke Aktiengesellschaft, 80809 München (DE)
(72) Erfinder: STEFFEN, Rainer, 80636 München (DE); HINTERMAIER, Wolfgang, 85435 Erding (DE)
(74) Vertreter: Mayer-Martin, Christian
(86) Internationale Anmeldenummer: PCT/EP2008/010144
(87) Internationale Veröffentlichungsnummer: WO 2009/083080

(56) Entgegenhaltungen:
- NIKOLOUTSOS E ET AL: "Integrating IP traffic into fieldbus networks" INDUSTRIAL ELECTRONICS, 2002. ISIE 2002. PROCEEDINGS OF THE 2002 IEEE INTERNATIONAL SYMPOSIUM ON JULY 8-11, 2002, PISCATAWAY, NJ, USA,IEEE, Bd. 1, 8. Juli 2002 (2002-07-08), Seiten 67-72, XP010598147 ISBN: 978-0-7803-7369-3
- JAN-CASPAR KAISER: "Feldbusprotokolle im Automobilbereich: Flexray" INTERNET CITATION, [Online] XP002418162 Gefunden im Internet: URL:http://www.ida.ing.tu-bs.de/academics/ seminars/archiv/downloads/ss200 5/Kaiser_SS05.pdf> [gefunden am 2007-01-31]
- TREYTL A ET AL: "Security measures for industrial fieldbus systems - state of the art and solutions for IP-based approaches" FACTORY COMMUNICATION SYSTEMS, 2004. PROCEEDINGS. 2004 IEEE INTERNATIO NAL WORKSHOP ON VIENNA, AUSTRIA SEPT. 22-24, 2004, PISCATAWAY, NJ, USA,IEEE, 22. September 2004 (2004-09-22), Seiten 201-209, XP010756399 ISBN: 978-0-7803-8734-8

## Beschreibung

Die Erfindung betrifft ein Kommunikationssystem insbesondere für ein Kraftfahrzeug.

Zur Datenübertragung zwischen Kraftfahrzeug-Steuergeräten etabliert sich derzeit der so genannte Flex-Ray-Standard ("FlexRay"), der durch eine vorgegebene Protokollspezifikation beschrieben wird.

Flex-Ray soll die erhöhten Anforderungen zukünftiger Vernetzung im Fahrzeug erfüllen, insbesondere höhere Datenübertragungsrate, Echtzeit-Fähigkeit und Ausfallsicherheit. Im aktuellen Fokus steht jedoch vorrangig die höhere Datenrate, welche durch die kontinuierliche Zunahme von verteilten Anwendungen, beispielsweise Fahrerassistenzsystemen, in Premiumfahrzeugen heute notwendig ist.

Um einen Flex-Ray-Netzknoten, z.B. ein Steuergerät, an einem Flex-Ray-Bus zu betreiben, werden in der Regel zwei Komponenten eingesetzt: der Bus Transceiver und den Communication Controller.

Der Bus Transceiver stellt die direkte Verbindung zur Datenleitung her: Einerseits schreibt er die logische Information, die versendet werden soll, in Form von Spannungspulsen auf den Bus; andererseits liest er die Signale aus, die von anderen Teilnehmern auf dem Bus gesendet werden. Diese Ebene wird als physikalische Bitübertragungsschicht oder Physical Layer bezeichnet.

Außerdem umfasst Flex-Ray noch das Busprotokoll. Das Busprotokoll regelt, wie ein Netzwerk startet, wie ein Bustakt etabliert wird und welche Steuergeräte zu welchem Zeitpunkt senden dürfen. Der Communication Controller setzt das Busprotokoll in jedem Steuergerät um, beispielsweise verpackt er die zu übertragenden Informationen in ein Datenpaket und übergibt dieses Datenpaket zum richtigen Zeitpunkt zur Übertragung an den Bus Transceiver

Das Internet Protocol (IP) ist ein in Computernetzen weit verbreitetes Netzwerkprotokoll. Es ist eine (bzw. die) Implementierung der Internet-Schicht des TCP/IP-Referenzmodells bzw. der Vermittlungsschicht (Network Layer) des OSI-Referenzmodells. IP bildet die erste vom Übertragungsmedium unabhängige Schicht der Internetprotokoll-Familie. Eine IP-Adresse (Internet-Protocol-Adresse) dient zur eindeutigen Adressierung von Rechnern und anderen Geräten in einem IP-Netzwerk.

Aus der Schrift NIKOLOUTSOS E ET AL, "Integrating IP traffic into fieldbus networks", INDUSTRIAL ELECTRONICS, 2002. ISIE 2002. PROCEEDINGS OF THE 2002 IEEE INTERNATIONAL SYMPOSIUM ON JULY 8-11, 2002, PISCATAWAY, NJ, USA,IEEE, (20020708), vol. 1, ISBN 978-0-7803-7369-3, PAGE 67 - 72, XP010598147 sind Feldbus-Netzknoten bekannt, durch die Nutzdatenpakete auf die physikalische Schicht des Feldbusses umgesetzt werden. Dazu werden in einem Zwischenschritt die Nutzdatenpakte auf einen Data Link Layer abgebildet.

Aus der Schrift JAN-CASPAR KAISER, "Feldbusprotokolle im Automobilbereich: Flexray", INTERNET CITATION, URL:http://www.ida.ing.tu-bs.de/academics/seminars/archiv/downloads/ss200 5/Kaiser_SS05.pdf, (20070131), XP002418162, ist es bekannt als Feldbus einen Flexraybus zu verwenden.

Der Erfindung liegt nun die Aufgabe zugrunde, ein flexibles Kommunikationssystem anzugeben.

Diese Aufgabe wird durch die Merkmale des unabhängigen Anspruchs gelöst. Vorteilhafte Weiterbildungen der Erfindung sind den abhängigen Ansprüchen zu entnehmen.

Ein erfindungsgemäßes Kommunikationssystem umfasst eine Vielzahl von Flex-Ray-Netzknoten, durch die jeweils Nutzdatenpakete in einem IP-Datenpaketformat oder Ethernet-Datenpaketformat bereitgestellt, insbesondere erzeugt, übermittelt, zwischengespeichert und/oder modifiziert, werden. Das IP-Datenpaketformat oder das Ethernet-Datenpaketformat weist jeweils eine Vielzahl von Bitstellen auf, die zur Übertragung vorgegebener Informationsarten vorgesehen sind. Über die physikalische Schicht eines Flex-Ray-Bussystems werden Daten zwischen den Flex-Ray-Netzknoten übertragen. Die Flex-Ray-Netzknoten sind dabei derart eingerichtet, dass Inhalte der Bitstellen der Nutzdatenpakete, insbesondere mittelbar oder unmittelbar, jeweils in entsprechende Signale, Signalformen, Pulsformen oder Signalpulse der physikalischen Schicht des Flex-Ray-Bussystems (FRB) umgesetzt werden. Die Nutzdatenpakete werden dabei vorzugsweise vor einer Umsetzung auf die vorgegebenen Signale der physikalischen Schicht des Flex-Ray-Bussystem nicht in Flex-Ray-Datenrahmen umgesetzt oder gepackt. Ein erfindungsgemäßer Flex-Ray-Netzknoten unterscheidet sich also vorzugsweise dadurch von einem herkömmlichen Flex-Ray-Netzknoten, dass durch ihn Nutzdatenpakete in einem IP-Datenpaketformat oder Ethernet-Datenpaketformat bereitgestellt werden, und dass diese - ohne Zwischenspeicherung in Form von Flex-Ray-Datenrahmen (mit entsprechendem vorgegebenen Datenformat) - auf die an sich bekannte und vorgegebene, insbesondere standardisierte, physikalische Schicht des Flex-Ray-Bussystems (FRB) abgebildet werden.

Dadurch wird erreicht, dass IP-Datenpakete oder Ethernet-Datenpakete, die aus einer Vielzahl von bekannten programmtechnischen oder hardwaretechnischen Einrichtungen hervorgehen können, über eine bewährte, insbesondere für kraftfahrzeugtechnische Umgebungen erprobte und geeignete, physikalische Schicht übertragen werden können. Dadurch dass das starre logische Gerüst des Flex-Ray-Bussystems, das im Wesentlichen durch die Flex-Ray-Datenrahmen-Struktur und die Flex-Ray-Zeitschlitz-Struktur bestimmt ist, nicht angewendet wird, sondern stattdessen IP-Datenpakete oder Ethernet-Datenpakete direkt auf die physikalische Schicht abgebildet werden, können die Flexibilitäts- und Kostenvorteile der IP/Ethernet-Technologie mit den Vorteilen der Flex-Ray-Technologie kombiniert werden. Es wird insgesamt ein stabiles, zuverlässiges, flexibles, leistungsfähiges und ökonomisch realisierbares Kommunikationssystem, insbesondere für ein Kraftfahrzeug, geschaffen.

Es können neben den erfindungsgemäß eingerichteten Flex-Ray-Netzknoten in dem Kommunikationssystem selbstverständlich auch herkömmliche Flex-Ray-Netzknoten vorgesehen sein.

Selbstverständlich können die Flex-Ray-Netzknoten auch derart eingerichtet sein, dass sie neben der erfindungsgemäßen Umsetzung von Daten auf die physikalische Flex-Ray-Schicht auch eine konventionelle Umsetzung von Daten auf die physikalische Flex-Ray-Schicht durchführen, wobei die Daten vorher in Flex-Ray-Datenrahmen gepackt werden. Je nach Ausführungsvariante kann es sich bei dem Flex-Ray-Bussystem und/oder den Flex-Ray-Netzknoten um gegenüber einem herkömmlichen Flex-Ray-Bussystem und/oder herkömmlichen Flex-Ray-Netzknoten modifizierte oder "abgespeckte" Einrichtungen handeln.

Ein IP-Datenpaket umfasst im Rahmen der Erfindung Datenpakete, die gemäß dem Internet-Protocol gebildet sind, aber auch Datenpakete, die aus einem solchen Internet-Protocol-konformen Datenpaket abgeleitet oder in Anlehnung an solche Datenpakete gemäß dem Internet-Protocol gebildet sind; auch ein Ethernet-Paket kann in diesem Sinne als IP-Datenpaket aufgefasst werden. Beispielsweise umfasst ein IP-Datenpaket im Rahmen der Erfindung auch Datenpakete, die gemäß dem Internet-Protocol gebildet sind, die aber weitere Daten umfassen, oder Teile von Datenpaketen, die gemäß dem Internet-Protocol gebildet sind. Ebenso sind im Rahmen der Erfindung von dem Begriff "IP-Datenpaket" Datenpakete umfasst, die unmittelbar oder mittelbar aus einer Internet-Protokollschicht hervorgehen. In der Regel umfasst das IP-Datenpaket eine IP-Adresse oder Zieladresse.

Im Rahmen der Erfindung umfasst ein Flex-Ray-Netzknoten auch Netzknoten, die von einem Flex-Ray-Protokoll lediglich die physikalische Schicht ausführen oder umfassen. Entsprechend umfasst ein Flex-Ray-Bussystem im Rahmen der Erfindung ein Bussystem oder Busprotokoll, das von dem Flex-Ray-Protokoll lediglich die physikalische Schicht ausführt oder umfasst. Die anderen Schichten können ganz oder teilweise gemäß anderen, beispielsweise an sich bekannten Protokollen oder Spezifikationen ausgeführt sein.

Besonders flexibel ist ein Kommunikationssystem, das ein IP-Netzwerk und ein Flex-Ray-Bussystem umfasst, wobei das IP-Netzwerk durch einen Router mit dem Flex-Ray-Bussystem gekoppelt ist.

Vorzugsweise ist ein Flex-Ray-Netzknoten und/oder der Router derart eingerichtet, dass durch ihn alle über das Flex-Ray-Bussystem übertragenen Datenpakete empfangen werden und entsprechend einem IP-Datenpaketformat oder Ethernet-Datenpaketformat interpretiert werden.

Besonders bevorzugt ist es, wenn die Flex-Ray-Netzknoten zur Ausführung einer Medienzugriffsschicht eingerichtet sind, durch die in einem IP-Datenpaketformat oder Ethernet-Datenpaketformat bereitgestellte Nutzdatenpakete auf entsprechende Signale der physikalischen Schicht des Flex-Ray-Bussystems umgesetzt werden.

Vorzugsweise basiert das Flex-Ray-Bussystem, insbesondere die physikalische Schicht des Flex-Ray-Bussystems, auf zwei physikalischen Flex-Ray-Kanälen (erster Kanal zweiter Kanal). Vorzugsweise ist dazu eine Kommunikationssteuereinrichtung, wie beispielsweise eine programmtechnisch entsprechend eingerichtete Prozessoreinrichtung, zumindest eines Flex-Ray-Netzknotens derart eingerichtet ist, dass die physikalische Schicht des Flex-Ray-Bussystems einen ersten und einen zweiten physikalischen Kanal umfasst.

Vorteilhafterweise ist die Kommunikationssteuereinrichtung zudem derart eingerichtet, dass über den ersten Kanal Daten gesendet werden und über den zweiten Kanal Daten empfangen werden.

Alternativ oder ergänzend dazu ist die Kommunikationssteuereinrichtung vorzugsweise derart eingerichtet, dass Inhalte der Bitstellen der Nutzdatenpakete, die im IP-Datenpaketformat oder im Ethernet-Datenpaketformat vorliegen, jeweils auf entsprechende Signale des ersten Kanals umgesetzt werden. Es werden also erfindungsgemäß erzeugte Signale über den ersten Kanal übertragen. Andere, beispielsweise konventionell erzeugte Signale, werden beispielsweise über den zweiten Kanal übertragen.

Auf Signale des zweiten Kanals werden beispielsweise nie Inhalte der Bitstellen der Nutzdatenpakete, die im IP-Datenpaketformat oder im Ethernet-Datenpaketformat vorliegen, umgesetzt. Daten, die im IP-Datenpaketformat oder im Ethernet-Datenpaketformat vorliegen, werden durch die - IP-Datenpaket oder Ethernet-Datenpaket bereitstellenden - Flex-Ray-Netzknoten nur dem vorgegebenen ersten Kanal zugeteilt, und werden auch nur auf diesem Kanal von anderen Flex-Ray-Bussystem-Teilnehmern erwartet.

Alternativ oder ergänzend dazu ist die Kommunikationssteuereinrichtung bevorzugt derart eingerichtet ist, dass Inhalte der Bitstellen der Nutzdatenpakete, die im Flex-Ray-Datenrahmenformat vorliegen, jeweils auf entsprechende Signale des zweiten Kanals umgesetzt werden.

Alternativ oder ergänzend zur soeben genannten Ausführung basiert das Flex-Ray-Bussystem auf zwei physikalischen Flex-Ray-Kanälen. Zumindest ein Flex-Ray-Netzknoten und/oder der Router sind dabei derart eingerichtet, dass durch den Flex-Ray-Netzknoten und/oder den Router Flex-Ray-Datenrahmen, die ein IP-Datenpaket enthalten, nur einem der zwei physikalischen Flex-Ray-Kanäle zugeteilt werden. Dem anderen Flex-Ray-Kanal wird beispielsweise nie ein Flex-Ray-Datenrahmen, der ein IP-Datenpaket enthält, zugeteilt. Flex-Ray-Datenrahmen, die ein IP-Datenpaket enthalten, werden durch die - IP-Datenpaket bereitstellenden - Flex-Ray-Netzknoten (oder Router) nur dem vorgegebenen Flex-Ray-Kanal zugeteilt, und werden auch nur auf diesem Flex-Ray-Kanal von anderen Flex-Ray-Bussystem-Teilnehmern erwartet.

Im Folgenden wird die Erfindung anhand von Beispielen unter Bezugnahme auf die folgenden Figuren näher erläutert:
- Figur 1: zeigt eine vereinfachte Darstellung eines Kommunikationssystems;
- Figur 2: zeigt eine vereinfachte Protokollschichten-Darstellung gemäß einem ersten Ausführungsbeispiel.

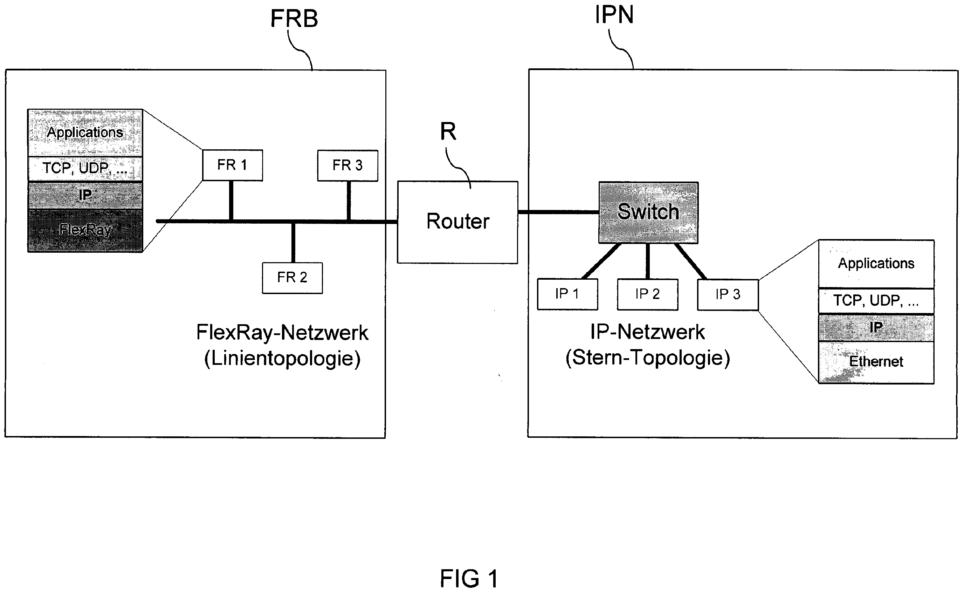

Figur 1 zeigt ein Kommunikationssystem, das ein modifiziertes Flex-Ray-Bussystem FRB und ein IP-Netzwerk IPN umfasst, die miteinander durch einen Router R gekoppelt sind.

Die physikalische Schicht FlexRayPHY des Flex-Ray-Bussystem FRB verbindet eine Vielzahl von modifizierten Flex-Ray-Netzknoten FR1, FR2, FR3 miteinander.

Innerhalb des IP-Netzwerks IPN sind mehrere IP-Netzknoten IP1, IP2, IP3 über einen IP-Switch miteinander verbunden.

Die IP-Netzknoten IP1,IP2,IP3 und/oder die Flex-Ray-Netzknoten FR1,FR2,FR3 können jeweils ein Kraftfahrzeug-Steuergerät (nicht dargestellt) umfassen oder damit gekoppelt sein.

Um Daten zwischen den Netzknoten untereinander und/oder mit dem Router auszutauschen, ist auf den Netzknoten ein Kommunikationsprotokoll installiert, das in verschiedene Schichten gegliedert ist.

Bei den Flex-Ray-Netzknoten FR1, FR2, FR3 ist die unterste Schicht (Bitübertragungsschicht, physikalische Schicht) gebildet oder bestimmt durch die Flex-Ray-Spezifikation oder die entsprechende Schicht des Flex-Ray-Protokolls. Darüber liegt als Vermittlungsschicht die IP(Internet Protocol)-Schicht. Darüber liegt als Transportschicht zum Beispiel das Transmission Control Protocol (TCP) oder das User Datagram Protocol (UDP). Darüber sind in der Anwendungsschicht verschiedene Applikationen realisiert.

Durch die Applikationen werden Daten erzeugt und in definierter Form an die Transportschicht weitergegeben. Durch die Transportschicht werden diese Daten insbesondere um Steuerdaten ergänzt und in definierter Form an die Vermittlungsschicht weitergegeben. Durch die Vermittlungsschicht werden die Daten insbesondere um Steuerdaten weiter ergänzt in IP-Datenpakete gepackt und an die Flex-Ray-Schicht übergeben. Zur physikalischen Bitübertragung werden die logischen Werte der Bitstellen des IP-Datenpaketes entsprechend den Vorgaben des Flex-Ray-Protokolls in physikalische Signale umgesetzt und über den Flex-Ray-Bus, insbesondere die entsprechenden physikalischen Leitungen, übertragen. Dieser Ablauf kann für den Empfang von Daten durch einen Flex-Ray-Netzknoten FR1, FR2, FR3 in umgekehrter Richtung ablaufen.

Bei den IP-Netzknoten IP1, IP2, IP3 ist die unterste Schicht (Bitübertragungsschicht) gebildet durch das Ethernet-Protokoll oder die entsprechende Schicht des Ethernet-Protokolls. Darüber liegt als Vermittlungsschicht die IP(Internet Protocol)-Schicht. Darüber liegt als Transportschicht zum Beispiel das Transmission Control Protocol (TCP) oder das User Datagram Protocol (UDP).Darüber sind in der Anwendungsschicht verschiedene Applikationen realisiert.

Wie oben bereits geschildert, werden auch bei den IP-Netzknoten IP1, IP2, IP3 durch die Applikationen Daten erzeugt und in definierter Form an die Transportschicht weitergegeben. Durch die Transportschicht werden diese Daten insbesondere um Steuerdaten ergänzt und in definierter Form an die Vermittlungsschicht weitergegeben. Durch die Vermittlungsschicht werden die Daten insbesondere um Steuerdaten weiter ergänzt in IP-Datenpakete gepackt und an die Ethernet-Schicht übergeben. Dort werden die IP-Datenpakete zur physikalischen Bitübertragung über das Ethernet in einen Ethernet-Datenrahmen gepackt. Dieser Ablauf kann für den Empfang von Daten durch einen IP-Netzknoten wieder in umgekehrter Richtung ablaufen.

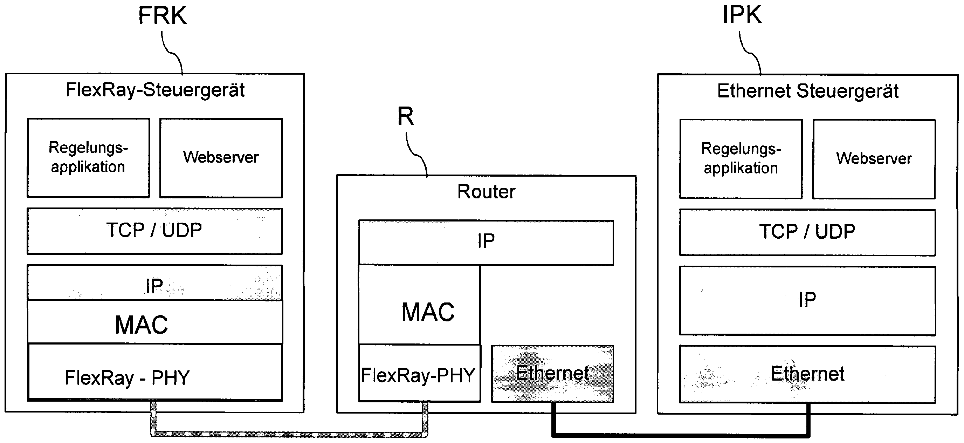

In Figur 2 sind exemplarisch ein Flex-Ray-Netzknoten FRK und ein IP-Netzknoten IPK mit den zugehörigen Protokollschichten dargestellt. Der Flex-Ray-Netzknoten FRK und der IP-Netzknoten IPK sind durch einen Router R miteinander gekoppelt.

Die durch die IP-Schicht IP des Flex-Ray-Netzknotens FRK bereitgestellten IP-Datenpakete werden durch eine entsprechend eingerichtete Medienzugriffsschicht MAC direkt auf die physikalische Schicht des Flex-Ray-Protokolls umgesetzt.

Die entsprechenden physikalischen Signale werden durch den Router R empfangen und über eine entsprechende Medienzugriffsschicht MAC auf entsprechende IP-Datenpakete rückabgebildet. Diese IP-Datenpakete können dann auf an sich bekannte Art von dem Router über das Ethernet an einen Ziel-IP-Netzknoten IPK vermittelt werden.

Durch die Medienzugriffsschicht MAC kann zudem ein gegenüber dem TDMA-Verfahren der Flex-Ray-Spezifikation flexibleres Medienzugriffsverfahren realisiert sein. Dabei erwiesen sich insbesondere die folgenden, an sich bekannten Verfahren als besonders vorteilhaft:
- Aloha-Verfahren: Sobald Daten zur Übertragung anliegen, werden diese auf den Bus gesendet. Da es bei der Übertragung zu Kollisionen durch gleichzeitig sendende Knoten kommen kann, wird jedes übertragene Datenpaket bestätigt.
- Carrier Sense Multiple Access (CSMA): Bevor auf den Bus zugegriffen wird um zu senden, wird überprüft ob bereits ein anderer Knoten eine Nachricht überträgt (Carrier Sense). Ist dies nicht der Fall, kann auf den Bus zugegriffen werden. Sollte der Bus aktuell belegt sein, können unterschiedliche Strategien zur weiteren Beobachtung des Buszustands eingesetzt werden:
   1-persistent: Sobald der Bus als frei erkannt wird, wird die Übertragung gestartet. Sollten mehrere Knoten gleichzeitig einen Sendewunsch habe, kann es zu Kollisionen kommen.
   non-persistent: Nach dem Erkennen eines belegten Kanals wird eine zufällige Backoff-Zeit gewartet bis erneut versucht wird auf den Bus zuzugreifen.
   p-persistent: Sobald der Bus als frei erkannt wird, wird mit einer Wahrscheinlichkeit von p auf den Bus gesendet und mit einer Wahrscheinlichkeit von 1-p eine bestimmte Zeit gewartet.
- Falls die Physikalische Schicht in der Lage ist eine Kollision zu detektieren, kann diese Information genutzt werden, um Zugriffskonflikte aufzulösen. Eine Methode Zugriffskonflikte aufzulösen besteht darin, eine zufällige Zeit nach einer Kollision zu warten, bevor erneut auf das Medium zugegriffen wird.
- Priorisierter CSMA Zugriff: Durch eine Variation der Wartezeiten bis auf den Bus zugegriffen werden darf kann den Datenpaketen eine Priorität zugewiesen werden.
- Master Slave: Um ein deterministisches zeitliches Verhalten zu ermöglich, besteht die Möglichkeit, den Buszugriff über ein Master/Slave Verfahren zu regeln. Hierbei gibt es im System mindestens einen Master, der den Zugriff der Busteilnehmer regelt, indem er ihnen Senderechte explizit und exklusiv zuteilt.

Zudem besteht die Möglichkeit, die übertragenen Datenpakete jeweils mit einem Acknowledgement-Paket (ACK) oder einem Not-Acknowledgement-Paket (NACK) abzusichern. Im Bedarfsfall kann dann eine erneute Übertragung des verloren gegangenen Datenpaketes durchgeführt werden.

## Patentansprüche

1. Kommunikationssystem
- mit einer Vielzahl von Flex-Ray-Netzknoten (FR1, FR2, FR3), durch die jeweils Nutzdatenpakete in einem IP-Datenpaketformat oder Ethernet-Datenpaketformat bereitgestellt werden, wobei das IP-Datenpaketformat oder das Ethernet-Datenpaketformat jeweils eine Vielzahl von Bitstellen aufweist,
- mit einem Flex-Ray-Bussystem (FRB), über dessen physikalische Schicht Daten zwischen den Flex-Ray-Netzknoten (FR1, FR2, FR3) übertragen werden, **dadurch gekennzeichnet, dass** die Flex-Ray-Netzknoten (FR1, FR2, FR3) derart eingerichtet sind, dass Inhalte der Bitstellen der Nutzdatenpakete ohne Zwischenspeicherung in Form von Flex-Ray-Datenrahmen jeweils auf entsprechende Signale der physikalischen Schicht des Flex-Ray-Bussystems (FRB) umgesetzt werden.

2. Kommunikationssystem nach Anspruch 1
bei dem ein Flex-Ray-Netzknoten (FR1, FR2, FR3) derart eingerichtet ist, dass durch ihn alle über das Flex-Ray-Bussystem übertragenen Datenpakete empfangen werden und entsprechend einem IP-Datenpaketformat oder Ethernet-Datenpaketformat interpretiert werden.

3. Kommunikationssystem nach einem der vorhergehenden Ansprüche,
bei dem die Flex-Ray-Netzknoten (FR1, FR2, FR3) zur Ausführung einer Medienzugriffsschicht eingerichtet sind, durch die in einem IP-Datenpaketformat oder Ethernet-Datenpaketformat bereitgestellte Nutzdatenpakete auf entsprechende Signale der physikalischen Schicht des Flex-Ray-Bussystems (FRB) umgesetzt werden.

4. Kommunikationssystem nach einem der vorhergehenden Ansprüche,
bei dem ein Flex-Ray-Netzknoten (FR1, FR2, FR3) eine Kommunikationssteuereinrichtung umfasst, die derart eingerichtet ist, dass die physikalische Schicht des Flex-Ray-Bussystems einen ersten und einen zweiten physikalischen Kanal umfasst.

5. Kommunikationssystem nach einem der vorhergehenden Ansprüche,
bei dem die Kommunikationssteuereinrichtung derart eingerichtet ist, dass über den ersten Kanal Daten gesendet werden und über den zweiten Kanal Daten empfangen werden.

6. Kommunikationssystem nach einem der vorhergehenden Ansprüche,
bei dem die Kommunikationssteuereinrichtung derart eingerichtet ist, dass Inhalte der Bitstellen der Nutzdatenpakete im IP-Datenpaketformat oder im Ethernet-Datenpaketformat jeweils auf entsprechende Signale des ersten Kanals umgesetzt werden.

7. Kommunikationssystem nach einem der vorhergehenden Ansprüche,
bei dem die Kommunikationssteuereinrichtung derart eingerichtet ist, dass Inhalte der Bitstellen der Nutzdatenpakete im Flex-Ray-Datenrahmenformat jeweils auf entsprechende Signale des zweiten Kanals umgesetzt werden.

## Claims

1. A communication system
- comprising a plurality of FlexRay network nodes (FR1, FR2, FR3), by means of which respective user data packets are provided in an IP data packet format or Ethernet data packet format, wherein the IP data packet format or the Ethernet data packet format has, in each case, a plurality of bit positions, and
- a FlexRay bus system (FRB), via the physical layer of which data are transmitted between the FlexRay network nodes (FR1, FR2, FR3),
**characterised in that**
the FlexRay network nodes (FR1, FR2, FR3) are designed in such a way that contents of the bit positions of the user data packets are, in each case, converted to corresponding signals of the physical layer of the FlexRay bus system (FRB) without temporary storage in the form of FlexRay data frames.

2. A communication system according to claim 1,
in which a FlexRay network node (FR1, FR2, FR3) is designed in such a way that all data packets transmitted via the FlexRay bus system are received by the FlexRay network node and are interpreted in accordance with an IP data packet format or Ethernet data packet format.

3. A communication system according to either one of the preceding claims, in which the FlexRay network nodes (FR1, FR2, FR3) are designed to implement a media access layer, by which user data packets provided in an IP data packet format or Ethernet data packet format are converted to corresponding signals of the physical layer of the FlexRay bus system (FRB).

4. A communication system according to any one of the preceding claims, in which a FlexRay network node (FR1, FR2, FR3) comprises a communication control device, which is designed in such a way that the physical layer of the Flex-Ray bus system comprises a first and a second physical channel.

5. A communication system according to any one of the preceding claims, in which the communication control device is designed in such a way that data are sent via the first channel and data are received via the second channel.

6. A communication system according to any one of the preceding claims, in which the communication control device is designed in such a way that contents of the bit positions of the user data packets in the IP data packet format or in the Ethernet data packet format are, in each case, converted to corresponding signals of the first channel.

7. A communication system according to any one of the preceding claims, in which the communication control device is designed in such a way that contents of the bit positions of the user data packets in the FlexRay data frame format are, in each case, converted to corresponding signals of the second channel.

## Revendications

1. Système de communication comprenant :
- un ensemble de noeuds de réseau Flex-Ray (FR1, FR2, FR3) par lesquels sont respectivement fournis des paquets de données utiles sous un format de paquets de données IP ou sous un format de paquets de données Ethernet,
le format de paquets de données IP ou le format de paquet de données Ethernet comprenant respectivement un ensemble de positions de bits,
- un système de bus Flex-Ray (FRB) par la couche physique duquel des données sont transmises entre les noeuds de réseau Flex-Ray (FR1, FR2, FR3),
**caractérisé en ce que**
les noeuds du réseau Flex-Ray (FR1, FR2, FR3) sont réalisés de sorte que les contenus des positions de bits des paquets de données utiles puissent respectivement être convertis, sans stockage intermédiaire, sous la forme d'un cadre de données Flex-Ray, vers des signaux correspondants de la couche physique du système de bus Flex-Ray (FRB).

2. Système de communication conforme à la revendication 1,
dans lequel un noeud du réseau Flex-Ray (FR1, FR2, FR3) est réalisé de façon à pouvoir recevoir, tous les paquets de données transmis par le système de bus Flex-Ray et les interpréter selon un format de paquets de données IP ou un format de paquets de données Ethernet.

3. Système de communication conforme à l'une des revendications précédentes,
dans lequel les noeuds du réseau Flex-Ray (FR1, FR2, FR3) sont conçus pour permettre la réalisation d'une couche d'accès aux médias par laquelle des paquets de données utiles fournis sous un format de données IP ou sous un format de données Ethernet peuvent être convertis vers des signaux correspondant de la couche physique du système de bus (FRB).

4. Système de communication conforme à l'une des revendications précédentes,
dans lequel un noeud du réseau Flex-Ray (FR1, FR2, FR3) comprend un dispositif de commande de communication réalisé de sorte que la couche physique du système de bus Flex-Ray comprenne un premier canal physique et un second canal physique.

5. Système de communication conforme à l'une des revendications précédentes,
dans lequel le dispositif de commande de communication est réalisé pour permettre d'émettre des données par le premier canal et de recevoir des données par le second canal.

6. Système de communication conforme à l'une des revendications précédentes,
dans lequel le dispositif de commande de communication est réalisé pour permettre de convertir respectivement des contenus des positions de bits des paquets de données utiles sous le format de paquets de données IP ou sous le format de paquets de données Ethernet vers des signaux correspondants du premier canal.

7. Système de communication conforme à l'une des revendications précédentes,
dans lequel le dispositif de commande de communication est réalisé pour permettre de convertir respectivement des contenus des positions de bits des paquets de données utiles sous le format de cadre de données Flex-Ray vers des signaux correspondants du second canal.
